(19) Europäisches Patentamt
European Patent Office
Office européen des brevets

(11) **EP 3 276 077 B1**

(12) **EUROPEAN PATENT SPECIFICATION**

(45) Date of publication and mention
of the grant of the patent:
**08.05.2019  Bulletin 2019/19**

(51) Int Cl.:
***E01C 13/08*** *(2006.01)*    ***C09K 17/40*** *(2006.01)*

(21) Application number: **16181427.2**

(22) Date of filing: **27.07.2016**

(54) **METHOD FOR SOIL REINFORCEMENT USING FINE MATERIAL AND NATURAL FIBERS**

VERFAHREN ZUR BODENVERFESTIGUNG MITHILFE VON FEINMATERIAL UND NATÜRLICHEN FASERN

PROCÉDÉ DE RENFORCEMENT DE SOL UTILISANT DU MATÉRIAU FIN ET DES FIBRES NATURELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.01.2018  Bulletin 2018/05**

(73) Proprietor: **Cemex Research Group AG
2555 Brügg bei Biel (CH)**

(72) Inventors:
• **GUERINI,, Alexandre
3250 Lyss (CH)**
• **VOLPATTI, Giovanni
2555 Aegerten (CH)**

(74) Representative: **Carvajal y Urquijo, Isabel et al
Clarke, Modet & Co.
Suero de Quiñones, 34-36
28002 Madrid (ES)**

(56) References cited:
**WO-A1-2011/051744    WO-A1-2012/159145
FR-A1- 2 835 258**

## Description

### FIELD OF THE INVENTION

The present invention relates to a method for soil reinforcement according to the preamble of claim 1. Particularly, the present invention relates to a method to reinforce clayey soils by mixing a fine material and natural fibres in the soil matrix. The higher endurance of the final soil makes it especially suitable for sport activities, such as football or rugby.

### BACKGROUND ART

A high number of sport activities are carried out in sport fields specially conceived for that purpose. More specifically, some sports, such as football, rugby or cricket, are played in grass fields made of clayey soils. Due to the high physical activity of the players involved in such sports, said grass fields can be highly damaged during a game, which lead to high maintenance costs and possible injury of the players. Therefore, it should be ensured that sport fields that are intensively used are also more resistant to damage. When the sport field is made of grass, ideally the grass roots shall be firmly fixed to the soil, ensuring that no holes are created while the sports activity is taking place that could lead to players' injury.

WO2011051744 provides a turf for sports, recreactional activities and/or for ornamental purposes comprising a mat of flexible material equipped with a first face and a second face opposite to each other. To the mat a plurality of fibres are connected of an artificial material in such a way that it forms an artificial turf that protrudes from the first face. The turf comprises, furthermore, a measured amount of a loose infill material, for example of granular type, distributed on the face of the mat. The turf comprises, furthermore, natural vegetable material, i.e. plants, belonging to one, or more plant species put in the loose infill material by means of sowing, traplantation of portions of plants, or a combination of the two solutions.

WO2012159145 describes a turf surface comprising: (a) a reinforcing root-permeable mat; (b) a removable root-permeable backing located beneath the reinforcing root-permeable mat; (c) a layer of growth media located on the reinforcing root-permeable mat; and (d) natural grass plants having roots extending downwardly through the layer of growth media and the reinforcing root-permeable mat and the removable root- permeable backing.

The problem with these solutions is that a permanent fixation of the grass roots is not so easy and damages in the field still occur that can only be fixed a posteriori.

One alternative that has been exploited lately is the usage of artificial fields based on water or bitumen bound granular material, such as grit or sand, but normally this type of surfaces is more abrasive and extremely hard, which leads to players becoming injured easily.

Another alternative is synthetic turf but it is too expensive to install and has high maintenance/ reparation costs. Moreover, the frictional resistance of this material is very high, causing wounds and injuries to the players. Also, the most common material used in artificial turf infill is crumb rubber, which is made from pulverized car tires, which can contain potentially dangerous chemicals and carcinogens. This has launched a debate about the possible health risks of artificial turf fields. So, a natural alternative that presents the same endurance as the artificial counterpart is needed.

Methods for soil reinforcement with fibers for withstanding intense activity have been disclosed in the prior art, as detailed below.

GB2342029 describes a composite for forming an artificial surface for sporting that comprises sand, pieces of a synthetic material (plastic or rubber), soil and grass seed. The pieces of synthetic material, when plastic, may be polyester fibres, polyamide fibres, and/ or polyalkene fibres. To produce such surface, sand and synthetic pieces are mixed together. Water may be added to the sand alone or to the mix. This mix is then laid to form a uniform layer. Grass seeds may be added during the mix or after placement of the composite. The layer is finally rolled.

In this document, usage of plastic or rubber materials instead of oil-based substances is disclosed, which may leach into the ground water, posing an environmental problem. Nevertheless, the usage of plastic or rubber materials does not represent a sustainable alternative, since the leakage of these products into the ground waters is also environmentally hazardous. Therefore, a more sustainable alternative, that also ensures a good reinforcement of soil for sports activity, is needed. Furthermore, the invention mentions that the mix should be "thoroughly" watered but no disclosure is done on how much water should be added.

FR2835258 describes a permeable and flexible substrate used notably for the creation of turfed sporting grounds comprises coconut fibers (1-5 weight %) and a granular material such as sand, as well as porous material such as pozzolana and organic material such as compost. The granular material is a non-calcareous sand of granulometry 0/2, and represents 75-80 weight% of the substrate. The porous mineral material comprises 15-25 weight% of the substrate. The organic material represents about 1 % of the dry weight of the substrate. An Independent claim is given for utilization of the substrate for the creation or the renewal of turfed sports grounds.

EP2161981 provides a grass surface for sporting and other recreational activities based on the mix of sand, an organic growth-supporting medium and two types of fibers (polyurethane and polypropylene fibers). The mix is delivered to the jobsite, wherein the top layer of the field is removed and the aforementioned mix is laid. Finally, grass seed and water are added as a final step. The document describe that where soil is used, this is preferably good quality top soil (screened and/or sterilised) from an approved source. The document discloses that the two fiber system guarantees a balance in hardness and ball rebound; also, it teaches that polypropylene fibers should be straight and of a certain length, to ensure the "cross linking" needed and homogeneity of the mix. This further reduces the choice of fibers that can be used, turning this method into a more expensive and not readily available one.

GB2274997 details a surface comprising sand, an organic growth supporting medium and elongate synthetic fibers, which need to have a length between 5mm and 75mm and be straight, so that one can assure the "cross linking" effect which leads to a better dispersion and a more resistant final material.

WO9914288 provides a method of reinforcing a clay soil, comprising the steps of mixing the soil with polymer fibers and compacting the resultant mixture. The fibers have an average length of 12mm - if less than 6mm, no improvement in the soil's strength is observed, while if greater than 18mm, then the fibers "ball up" during mixing. Preferably, said fibers are also coated with a dispersing agent to avoid their aggregation while being mixed into the soil. The specificity of the fibers to be used according to this patent makes it difficult to implement; in addition, the usage of synthetic fibers poses an environmental drawback that one wants to avoid with the present invention, when removing or disposing of the soil after some years.

WO9949137 tries to overcome the problems of the previous art by teaching a method through which crimped fibers can be used in these surfaces without mixing problems. WO9949137 presents an artificial surface (which comprises a layer of material formed from a mixture of inorganic particulate solid material and crimped fibers) and a semi-artificial surface (which comprises a layer of material formed from a mixture of grass and/or grass seeds, an inorganic particulate material, a grass support medium and crimped fibers). According to the invention, the inorganic particulate solid material is comprised of sand, soil, clay, brick, granite, limestone, aggregate, ash, coke or cinders, or a mixture of any of these. The document teaches that the improved properties of the surface are due to the fact that the fibers employed are crimped, said fibers having a length between 5-100 mm when measured in crimped form.

SUMMARY OF INVENTION

It is known that the mixture should be dry enough to prevent sinking of the roller but wet enough to allow satisfactory distribution of the fibers and fine material with the soil. The watering step is an important one - it should ensure the right distribution of the materials but avoid ending up with a slurry material.

The method according to the present invention provides a soil with good properties and environmental friendly, using only natural fibers.

Despite the many proposals for reinforced surfaces, none ensures an adequate mixing of the materials involved and consequent random distribution and interlocking of the fibers in the matrix. It has been observed in field applications that the fibers tend to separate from the sand / soil matrix once applied; hence not all fibers added to the mix will be part of the final mesh, interlock and contribute to the soil properties improvement. This is instantly observed when both straight and crimped fibers are used, rendering a final product where fibers are immediately noticed in the soil / sand matrix even when small quantities are added, without any visible cross linking between them.

The present invention proposes a novel method to reinforce soils wherein the different materials are mixed according to a new methodology that ensures the random distribution of fibers in a soil / fine material matrix, without segregation of the materials. Additionally, the product obtained is biodegradable but long lasting, which means that at the end of its lifetime, the product can be easily disposed of, which does not occur with the synthetic counterparts available, which need to be land filled, leading to extra costs and environmental problems, for example, the synthetic fibers contaminating the soils and/or ending up in water streams.

The present invention provides a method having the features of claim 1 for soil mixture reinforcement for growing grass for sport applications, the soil mixture comprising soil, fine material and natural fibers, the fine material being selected from the group consisting of sand, stone powder, bypass dust, limestone, brick powder and combinations thereof, the natural fibers being selected from the group consisting of fibers of banana, sisal, coconut, hemp, sugarcane/ bagasse, bamboo, jute, flax, elephant grass, musamba, wood, cotton, kenaf and combinations thereof, comprising the following steps:

(a) excavating and removing the top layer of an original soil to a depth from 10 to 30 cm,
(b) mixing

- the original soil removed in step (a) in a portion of 5 to 45% by weight of the total solid content of the soil mixture and a weight ratio of fine material to soil from 1.2 and 19,
- the fine material in a portion of 55 to 95% by weight of the total solid content of the soil mixture,

- the natural fibers in a portion of 0.6% to 3% by weight of the total solid content of the soil mixture, and
- water in a portion of 8% to 20% weight of the total solid content of the soil,

(c) discharging the soil mixture obtained in step (b) and placing it in a location and

(d) compacting the surface obtained after step (c).

Common equipment for excavating and removing the soil in step (a) may be used, such as excavators, bulldozers, trailer scrapers, semitrailer scrapers, self-propelled scrapers, graders or autograders.

The removed original soil in step (a) is evacuated and disposed or land filled since it can be full of crop, grass roots, etc. The soil used in step (b) is a new source of soil that is provided on the location where the soil mixture (or mix) prepared under step (b) is manufactured. The new source of soil can be any soil according to the definition given hereunder.

According to a further embodiment, only a fraction (5% to 45%) of the original soil is used in step (b), the rest of the original soil is evacuated and disposed of or land filled.

According to a further embodiment of the invention, the soil used in step (b) is a mixture of the original soil and a new soil.

As the soil mixture may contain additional fine materials, and since the soil mixture will be compacted in the space left by the original soil that was removed, at least 55% to 95% of the original soil will have to be evacuated and disposed of or land filled.

In step (b) of the method of the invention, any mixer can be used to blend the ingredients, for example disc pelletizers, paddle mixers, drum pelletizers, pin mixer agglomerators, ribbon blenders, single paddle mixers or planetary mixer.

More preferably, the mixer used in step (b) is a batch or continuous homogenizer equipped with three helical rotors and a mixing chamber for the homogeneous mechanical mixing of the different materials.

In step (b) of the method of the invention, the fine material may be, but is not limited to, fine aggregates. The invention allows the use of any material where most of its particles (90%) are smaller than 30 mm. Examples of finely divided material that can be used according to the embodiment of this invention are sand, stone powder, bypass dust, limestone, brick powder or a combination thereof. Preferably, the fine material is EN Norm sand 196-1- (0/2 mm). In order to achieve the best combination of soil mechanical properties and water permeability (see examples) the weight ratio between fine materials and soil according to the invention shall be located between 1.2 and 19.

In the method of the invention, any natural fibers may be used, for example, but not limited to, fibers of banana, sisal, coconut, hemp, sugarcane/ bagasse, bamboo, jute, flax, elephant grass, musamba, wood, cotton, kenaf or a combination thereof. Preferably, the natural fibers used are coconut fibers. This component is highly available - from 1,000 coconuts one can extract around 10 kg of coconut fibers. Because of its high concentration of lignin, coconut fibers are stronger than cotton but less flexible. The coconut fibers have good resistance to microbial action and, although a natural product and therefore biodegradable, coconut fibers have a low decomposition rate, which means that the soil reinforcement will last for a longer period, normally up to 3 years. Furthermore, coconut fibers have the ability to retain moisture, preventing soil from drying out, allowing vegetation to thrive.

The natural fibers dry content is in the range of 0.6 weight % to 3 weight % of the sum of the soil and fine material total weight.

According to the method of the invention, the natural fibers do not need any pre-treatment nor need any special configuration. Fibers with any lengths or diameters can be used as received.

To determine the optimal water content to be added in step (b) at which the soil will reach its maximum dry density, a Proctor Compaction Test should be performed, since said optimal water content will depend on the type of soil to be reinforced. Both the Standard Proctor Test (according to the norm ASTM D698) and the Modified Proctor Test (according to the norm ASTM D1557) may be used; the only difference between the two methods is the compaction energy (600 kN-m/m$^3$ for the Standard Proctor Test versus 2,700 kN-m/m$^3$ for the Modified Proctor Test).

The Proctor Compaction Test consists of compacting soil samples with a certain water content with standard compaction energy. In the Proctor Compaction Test, the soil to be analyzed is first air dried and then split into 4 to 6 samples. Water is then added to each soil sample with 3% to 5% increments between samples or more, depending on the type of soil. This allows to having 4 to 6 soil samples with different water contents between them. The soil samples are then placed in a 10 cm diameter mould in three different layers. Each layer receives 25 blows from the hammer. In the standard Proctor test, a 2.5 kg hammer is used which falls 305 mm, while in the modified Proctor test, a 4.5 kg hammer is used which falls 457 mm. Before placing a new layer, the surface of the previous one is scratched to ensure the distribution of the compaction effects.

At the end of the test, the sample is removed and dried and the dry density for each sample is determined. Based on said dry density and the water content of each sample, a curve is plotted for the dry density as a function of the water content. One can then determine the water content that will give the highest density. A $\pm$ 3% deviation from

the optimal water content given by Proctor test is acceptable.

It was found that the minimum amount of water that should be added to the mix is the amount of water that is absorbed by the natural fibers, which assures that the fibers are separated and also provides lubrication to the fibers in the final mix.

Adding an insufficient amount of water, for instance water quantities that are below the water that can be absorbed by the fibers, will lead to not homogenous distribution of the fibers since the fibers will agglomerate into lumps.

In order to determine the optimum amount of water that needs to be added to the mix, the Proctor Compaction tests have to be performed on the mix containing all the constituents (soil, fines and fibers).

Excess water additions will lead to segregation of the fines (typically 125 microns) in the mix and thus bad homogeneity of the mix, problems of compaction of the mix using placing and compaction equipment by excess plasticity and finely will lead the high shrinkage when the excess water will dry off, leaving cracks and gaps.

For most samples tested having a proportion of soil between 5 weight % and 45 weight % of the total solid content, fine material between 55 weight % and 95 weight % of the total solid content and natural fibers between 0.6 weight % and 3 weight % of the total solid content, the optimum added water or free water content (added to the dry fine material and soil and water statured fibers) according to the Proctor Compaction Test, preserving the mixing and placing characteristics and enabling homogeneous distribution of the water saturated fibers in the mix, was located between 8 weight % and 20 weight % of the total solid content of the mix according to the invention.

After step (c) of the method of the invention, the soil mixture is uniformly distributed manually or mechanically by means of a motor grader, which is a piece of machinery used in construction, more specifically used in creating flat surfaces and in preparing a base course for paved roads.

In step (d) of the method of the invention, the compaction of the soil mixture in step (d) is achieved by means of rolling equipment. This rolling equipment is typically a roller, which compacts asphalt or concrete, but also soil or gravel during the construction of infrastructure using those said materials.

In order to facilitate the natural fibers transportation, they are frequently grouped into big chunks that need to be broken down before being used. Therefore, the components in step (b) can be added all together in one single step or alternatively, especially if the natural fibers are provided in big chunks, the natural fibers are first dispersed in water and then mixed with sand and only after soil is added to the mix.

Thus, another embodiment is the method of the invention, wherein in step (b) fine material, natural fibers and water are added simultaneously.

Another embodiment is the method of the invention, wherein the fine material is selected from the group consisting of sand, stone powder, bypass dust, limestone, brick powder or a combination thereof.

In order to achieve the best combination of soil mechanical properties and water permeability (see examples) the weight ratio between fine materials and soil according to the invention shall be located between 1.2 and 19.

The total added water or free water, is located between 8 weight % and 20 weight % of the total solid content of the mix according to the invention.

As the fine material or the soil may have some level of humidity, the total added water shall be adapted to the water (humidity) already present in the fine material or soil.

Another embodiment is the method of the invention, wherein the proportion of natural fibers is comprised between 0.6% and 3% (w/w) of the total solid content.

Another embodiment is the method of the invention, wherein the natural fibers are selected from banana plant / fruit, sisal, coconut, hemp, sugarcane/ bagasse, bamboo, jute, flax, elephant grass, musamba, wood, cotton, kenaf or a combination thereof.

Table 1 shows the various characteristics of typical fibers used for the soil mix according to the invention.

Table 1 - Properties of the natural fibers that may be used according to the invention

|  | Length | Diameter | Water absorption | Density | Tensile strength | E-modulus |
|---|---|---|---|---|---|---|
| Unit | mm | mm | % | kg/m3 | Mpa | Gpa |
| Banana | - | - | - | - | 6 | - |
| Sisal | - | - | - | - | 280-560 | 13-26 |
| Coconut | 50-350 | 0.1-0.4 | 130-180 | 1.12-1.15 | 120-200 | 19-26 |
| Hemp | - | - | - | - | 7 | - |
| Sugarcane/Bagasse | - | 0.2-0.4 | 70-75 | 12-1.3 | 170-290 | 15-19 |
| Bamboo | - | 0.05-0.4 | 40-45 | 1.5 | 350-500 | 33-40 |

(continued)

| | Length | Diameter | Water absorption | Density | Tensile strength | E-modulus |
|---|---|---|---|---|---|---|
| Unit | mm | mm | % | kg/m3 | Mpa | Gpa |
| Jute | 180-300 | 0.1-0.2 | - | 1.5-1.9 | 250-350 | 26-32 |
| Flax | 500 | - | - | - | 100 | 100 |
| Elephant grass | - | - | - | - | 178 | 5 |
| Musamba | - | - | - | - | 83 | 1 |
| Wood | 2.5-5 | 0.015-0.08 | 50-75 | 1.5 | 700 | - |
| Cotton | - | - | - | 1.5-1.6 | 400 | 5-13 |
| Kenaf | - | - | - | 1.45 | 930 | 53 |

Another embodiment is the method of the invention, wherein the natural fibers are preferably coconut fibers.

In step b) of the method of the invention, superabsorbent polymers (SAPs) may be also added to the mix. SAPs, broadly speaking, are cross-linked polymer networks that will swell when in contact with water or aqueous solutions, forming a gel, and will release said liquid gradually over time when exposed to dry conditions. SAPs are able to absorb amounts of water a few hundred times their own weight - when added into soils, they will keep their moisture constant, hence being extremely advantageous if vegetation is planned to grow in that soil (for example, if the reinforced soil is going to be used in a sports field).

SAPs should be added in the range of 0.1% to 2% (w/w) of the total solid content.

Therefore, another embodiment is the method of the invention, wherein superabsorbent polymers are added in the mix in the range 0.1% to 2% (w/w) of the total solid content.

In step (b) of the invention, water saturated finely divided (less than 10 mm) porous materials additions like calcium silicates hydrates, zeolites, expanded perlite, vermiculite, crushed expanded or foamed concrete or combinations thereof can be added. Dosages of the finely divided porous materials additions are ranking from 0.5 - 5 weight % (dry solid content versus dry solid content of the fine material and soil). These particles will act as water reserves in the same way as the super absorbers.

In step (b) of the method of the invention, grass seeds may also be added to the mix in the range of 0.1% to 2% (w/w) of the total solid content.

Another embodiment is the method of the invention, wherein grass seeds are added in the mix in the range of 0.1% to 2% (w/w) of the total solid content.

Also, in step (b) of the method of the invention, fertilizer may also be added, wherein if the fertilizer is liquid, it is first mixed in the water. The concentration of fertilizer added is dependent on the vegetation that will be planted in the reinforced soil.

The final mix according to the invention presents a good dispersion of the materials, with good interlocking of the fibers, wherein all the fibers introduced in the mix remain in the matrix and contribute to the improvement of the soil properties in terms of resistance to wear. The product is also biodegradable, posing no environmental issue.

Another advantage according to the invention is that the water permeability of the mix (soil + fine material) will be decreased with the presence of the fibers whereas the cohesion of the soil mix (soil and fine material) is improved by the presence of fibers (see examples 1-3) without affecting the value of the angle of friction achieved by the fine material content. - The various soils, the fine materials and the mix according to the invention were tested using the US standard ASTM D 3080 direct shear test in order to identify 4 values that characterized the mechanical resistance according to Mohr Coulomb failure criteria.

1) Angle of internal friction $\phi$'

Soil friction angle is a shear strength parameter of soils. Its definition is derived from the Mohr-Coulomb failure criterion and it is used to describe the friction shear resistance of soils together with the normal effective stress.

In the stress plane of Shear stress-effective normal stress, the soil friction angle is the angle of inclination with respect to the horizontal axis of the Mohr-Coulomb shear resistance line.

2) Soil cohesion c'

Cohesion is the component of shear strength of a rock or soil that is independent of interparticle friction.

1') Residual angle of internal friction $\phi$'r

Residual Soil friction angle is a shear strength parameter of soils after peak is reached. Its definition is derived from the Mohr-Coulomb failure criterion and it is used to describe the friction shear resistance of soils together with the normal effective stress, after peak is reached.

2') Residual Soil cohesion c'r

Cohesion is the component of shear strength of a rock or soil that is independent of interparticle friction, calculated after peak is reached

The characteristic values c,$\phi$ are calculated by inverse fitting with the linear interpolation according to the following formulae:

$$\boldsymbol{\tau}' = \boldsymbol{c}' + \boldsymbol{\sigma}'\boldsymbol{v} \cdot \boldsymbol{tan\varphi}'$$

$$\boldsymbol{\tau}'\boldsymbol{r} = \boldsymbol{c}'\boldsymbol{r} + \boldsymbol{\sigma}'\boldsymbol{v} \cdot \boldsymbol{tan\varphi}'\boldsymbol{r}$$

The results of the tests on each specimen are represented by the various shear stress versus shear displacement according to the test (Figure 2) with different normal stress applied (1,2,3). Results are plotted on a graph with the peak (or residual) stress on the y-axis and the confining stress on the x-axis (Figures 3 and 4). The y-intercept of the curve which fits the test results is the cohesion, and the slope of the line or curve is the friction angle.

Direct shear tests can be performed under several conditions. The sample is normally saturated before the test is run, but can be run at the in-situ moisture content. The rate of strain can be varied to create a test of undrained or drained conditions, depending whether the strain is applied slowly enough for water in the sample to prevent pore-water pressure buildup. Direct shear test machine is required to perform the test. The test using the direct shear machine determinates the consolidated drained shear strength of a soil material in direct shear.

Typically, a pure fine material (e.g. sand 01-4 mm) have a high $\phi$' typically from 25° - 40° yet has a cohesion c' that is close to zero. On the other hand, a soil with high clay content will have a low $\phi$' typically from 5° - 25° yet the cohesion c' will be higher than fine material (between 10 KPa to 80 KPa).

The targeted mechanical properties derived from the test are the following:

$$15\degree < \phi' < 45°$$

$$5 \text{ KPa} < c' < 80 \text{ KPa}$$

$$10\degree < \phi' r < 40°$$

$$2 \text{ KPa} < c' r < 60 \text{ KPa}$$

The residual values ($\phi$'r and c'r) describe the remaining mechanical resistance of a soil after the peak resistance has been passed.

The various soils, fine materials and mixes according the invention were also tested with respect to water permeability that is a measure indicating the capacity of the soil or rock to allow fluids to pass through it (according to ASTM D2434-68 Reapproved 2006).

The water permeability K (mm/s) needs to be high enough to enable the water pressure to be released without affecting the mechanical properties of the soil or mix according to the invention, yet should be not too high to allow water to be retained in the soil or mix according to the invention so that grass can grow (roots can absorb required water).

Typically, the invention targets water permeability values K ranging from 0.001 mm/s to 0.1 mm/s.

Other embodiment is the method, wherein the soil mixture has a cohesion c' from 5 KPa to 80 KPa, an angle of internal friction $\phi$' from 15° to 45°, a residual angle of internal friction $\phi$'r from 10° to 40° and a residual cohesion c'r from 2 KPa to 60 KPa.

The present invention further provides a method, wherein step (b) comprises the following steps:

(b1) dispersing the natural fibers in water,

(b2) adding the dispersed fibers in water from step (b1) to the fine material and mixing;

(b3) adding the soil and mixing.

The free water (or added water) can be added during intermediate steps (b1) and/or (b2) and/or (b3).

The intermediate step (b1) requires using at least the quantity of water that the natural fibers can absorb in order to get sufficient dispersion of the fibers so the final soil mix will have an optimized homogeneity.

Other embodiment is the method, wherein in steps (b2) and (b3), mixing is in a mixer for 2 to 10 minutes.

Other embodiment is the method, wherein water is added during intermediate steps (b2) and/or (b3).

In another embodiment of the invention, intermediate steps (b2) and (b3) are performed simultaneously.

Other embodiment is the method, wherein in step (c) the mixture is uniformly distributed manually or mechanically.

Other embodiment is the method, wherein the components in step (b) are added simultaneously.

Other embodiment is the method, wherein superabsorbent polymers are added to the mix in step (b). In a particular embodiment, superabsorbent polymers are added in the range of 0.1% to 2% (w/w) of the total solid content.

Other embodiment is the method, wherein water saturated porous material with particle size of less than 10 mm additions is added to the mix in step (b).

Other embodiment is the method, wherein water saturated porous material is selected from the group consisting of calcium silicates hydrates, zeolites, expanded perlite, vermiculite, crushed expanded or foamed concrete and combinations thereof. In a particular embodiment, water saturated porous material is added from 0.5 to 5 by % weight of dry solid content with respect to dry solid content of the fine material and soil.

Other embodiment is the method, wherein grass seeds are added to the mix in step (b). In particular embodiment, grass seeds are added in the mix in step (b) in the range of 0.1% to 2% (w/w) of the total solid content.

LIST OF DEFINITIONS

Fibers: Material used to increase structural performance. Fibers include: all types of natural fibers are selected from banana plant / fruit, sisal, coconut, hemp, sugarcane/ bagasse, bamboo, jute, flax, elephant grass, musamba, wood, cotton, kenaf or a combination thereof.

Fine aggregates: Manufactured, natural or recycled minerals with a particle size greater than 4 mm and a maximum size lower than 8 mm.

Sand: Manufactured, natural or recycled minerals with a particle size lower than 4mm.

Soil: Soil is a natural body comprised of solids (minerals and organic matter), liquid, and gases that occurs on the land surface, occupies space, and is characterized by one or both of the following: horizons, or layers, that are distinguishable from the initial material as a result of additions, losses, transfers, and transformations of energy and matter or the ability to support rooted plants in a natural environment.mixture of minerals, organic matters, gases and liquid and countless organisms

BRIEF DESCRIPTION OF DRAWINGS

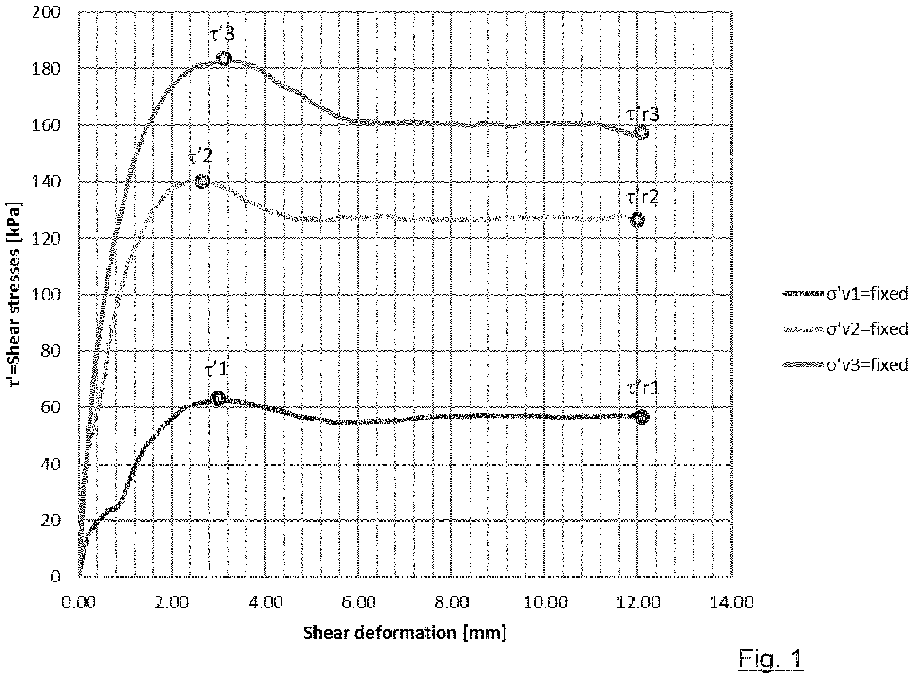

Figure 1. Shear stress versus shear deformation for 3 confinement loads

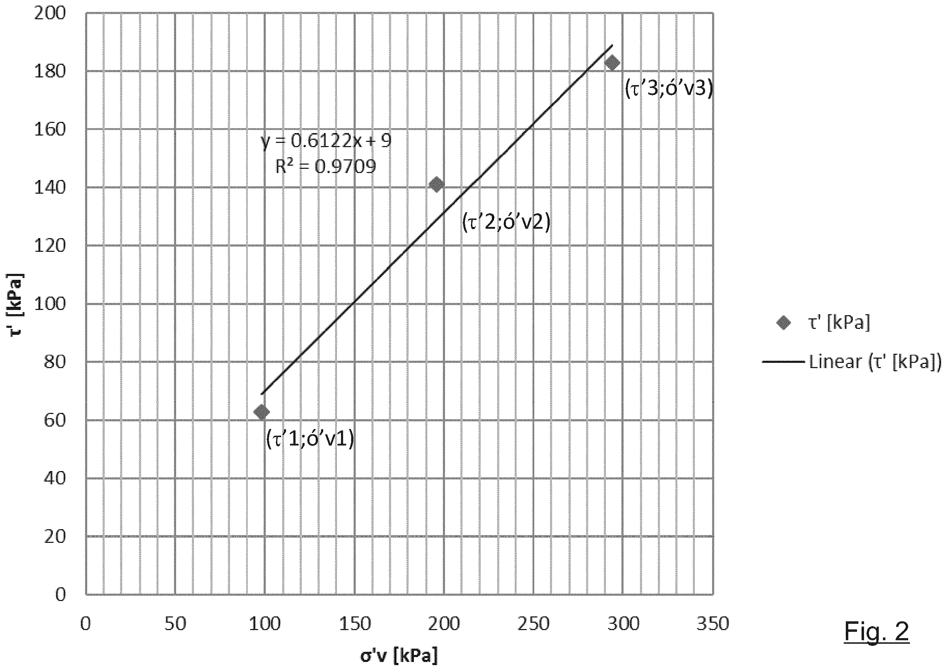

Figure 2. Mohr Coulomb failure envelop at peak resistance according to ASTM D3080

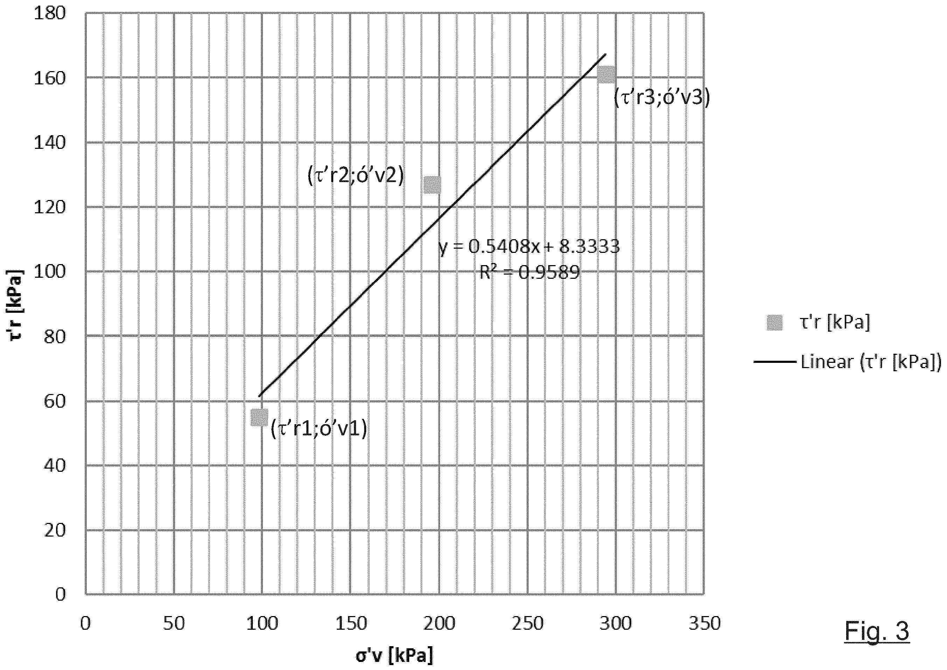

Figure 3. Mohr Coulomb residual resistance envelops calculated at a deformation of 12 mm according to ASTM D3080

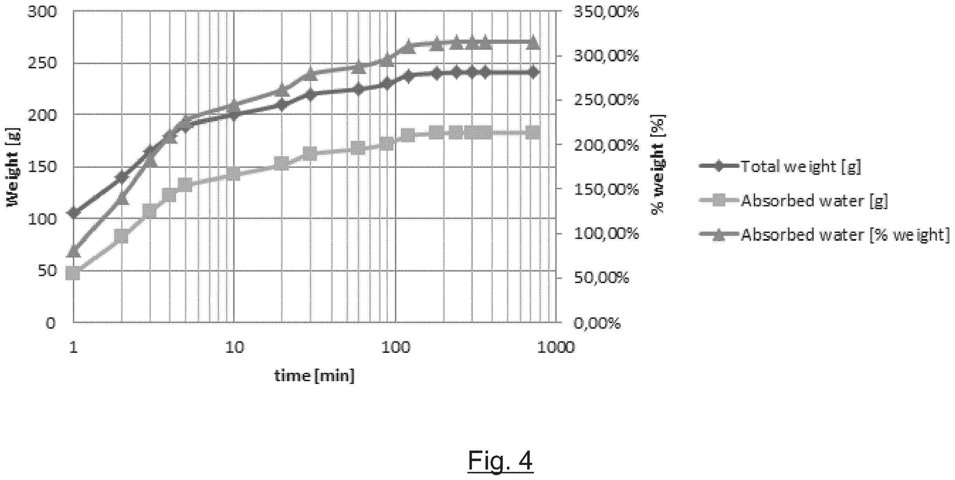

Figure 4. Absorbed water by coconut fibers during time. This figure shows the total weight (coconut fibers + water) and absorbed water (in grams and in % weight).

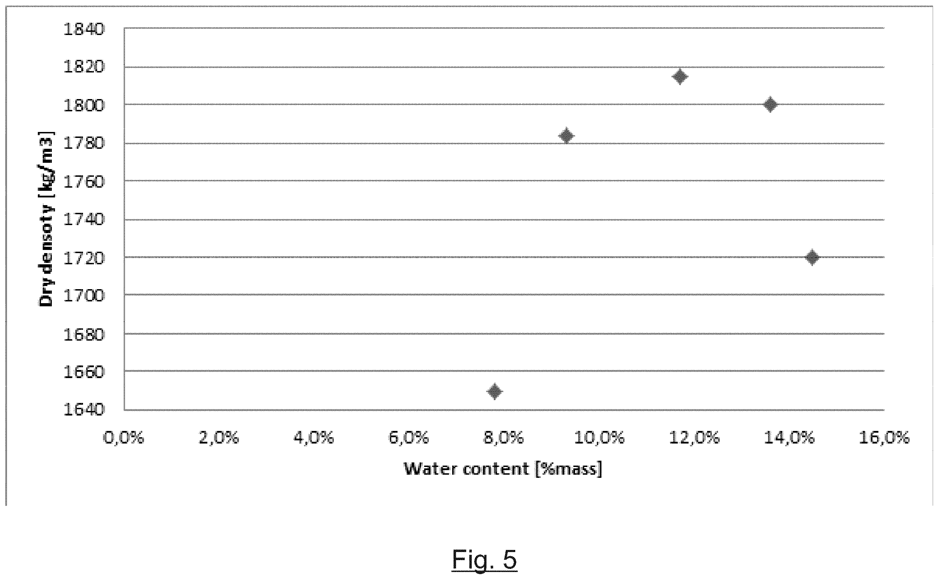

Figure 5. Proctor Compaction test for example 1

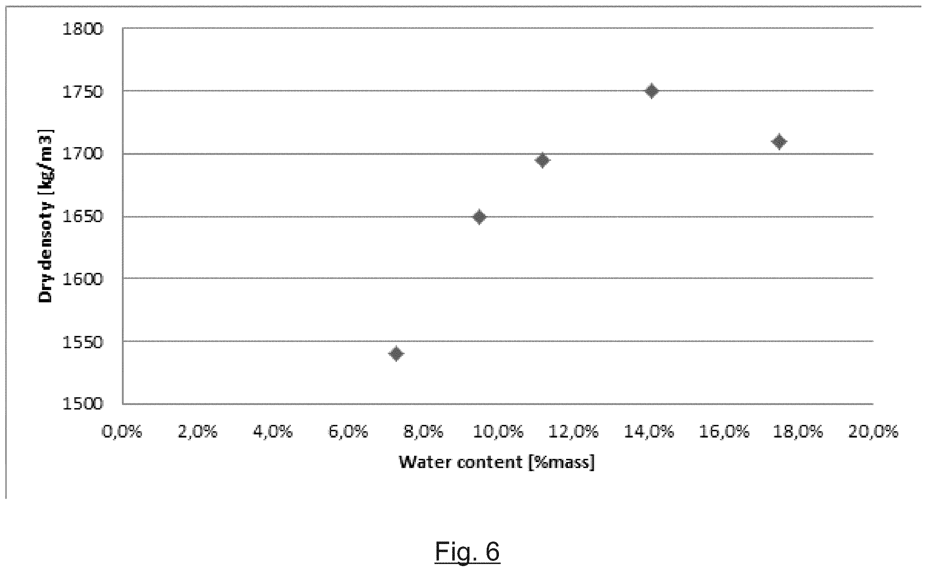

Figure 6. Proctor Compaction test for example 2

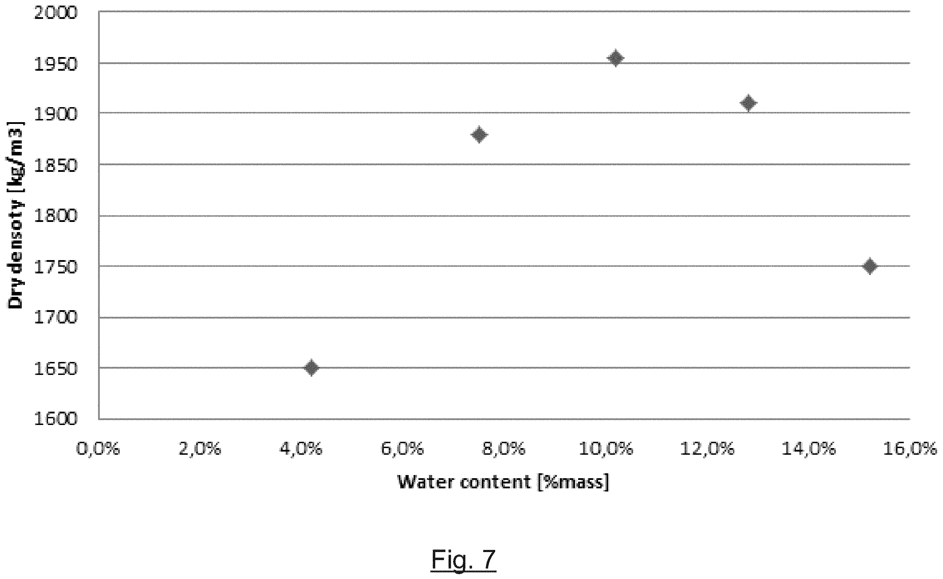

Figure 7. Proctor Compaction test for example 3

DESCRIPTION OF EMBODIMENTS

Tests were carried out to measure the quantity of water that can be absorbed by the fibers.

Fibers were dried in an oven at 105°C for 24 hours and then soaked in water for 12 hours. Samples were taken every 30 minutes to measure by mass difference the water absorbed by the fibers.

In the examples, the fibers were coco fibers with a length from 30-60 mm with a fibers density of 1400 Kg/m$^3$ and bulk density of 420 Kg/m$^3$. Results are shown in Figure 4, where it is shown that fibers are completely saturated in water after 4 hours (240 minutes).

According to the invention, the fibers shall be saturated with water prior to be mixed with the other components of the mix soil and the addition water, otherwise, the fibers will not disaggregate easily and the final mix will not be homogenous.

Therefore, it is important to evaluate the quantity of water that will be used to saturate the fibers in order to determine the amount of free water available for the optimization of the compaction of the final mix (Proctor test).

Finally, the humidity of the fine material and the soil need to be estimated in order to correct the quantity of free water (added water).

Example 1

Example 1 shows a soil mixture according to the invention, characterized by low fine material/soil ratio, a fine material that is a sand class 0/4, a soil (coming entirely from another location than the excavated soil), medium content of coco fibers (1.5%). The soaking process was done by adding only the minimum water required (saturation of the fibers); all the remaining water was added when mixing with the other components.

Table 2. Characterization of the raw material for example 1

| RAW MATERIAL CHARACTERIZATION | | |
|---|---|---|
| | | |
| **Fine material** | | |
| Granulometry class | mm | 0/4 |
| Max proctor dried density | kg/m3 | 1750 |
| Water at max proctor dried density | %mass | 13.2% |
| k-Water permeability | mm/s | 2.35E-02 |
| E-Elastic Modulus | kPa | 24100 |
| c'-Cohesion at peak | kPa | 0 |
| $\phi$'-Angle of internal friction at peak | ° | 37.45 |
| c'r-Residual cohesion | kPa | 0 |
| $\phi$'r-Residual angle of internal friction | ° | 32.28 |
| Humidity | %mass | 1.2% |
| | | |
| **Soil** | | |
| Granulometry class | mm | 0/2 |
| Max proctor dried density | kg/m3 | 2010 |
| Water at max proctor dried density | %mass | 7.5% |
| k-Water permeability | mm/s | 7.86E-04 |
| E-Elastic Modulus | kPa | 8800 |
| c'-Cohesion at peak | kPa | 25.3 |
| $\phi$'-Angle of internal friction at peak | ° | 27.95 |
| c'r-Residual cohesion | kPa | 14.8 |
| $\phi$'r-Residual angle of internal friction | ° | 23.8 |
| Humidity | %mass | 4.3% |
| | | |

(continued)

| Fibers | | |
| --- | --- | --- |
| Material | - | Coco |
| Dried density | kg/m3 | 1150 |
| Bulk density | kg/m3 | 250 |
| Lenght | mm | 15-60 |
| Diameter | mm | 0.05-0.5 |
| Tensile strenght | Mpa | 180 |
| E-Elastic Modulus | Mpa | 21500 |
| Water absorbtion | %mass | 175% |
| Humidity | %mass | 14% |

Table 3. Soil mixture composition for example 1

| SOIL+FINE MATERIAL+FIBERS+WATER MIXING | | |
| --- | --- | --- |
| | | |
| **Composition (dry materials)** | | |
| Fine material | kg | 750 |
| Soil | kg | 250 |
| Fibers | kg | 15 |
| Fine material/Soil | - | 3 |
| Fibers | %mass (fine material+soil) | 1.50% |
| | | |
| **Proctor (Soil+fine material+fibers)** | | |
| Dried density 1 | kg/m3 | 1650 |
| Dried density 2 | kg/m3 | 1784 |
| Dried density 3 | kg/m3 | 1815 |
| Dried density 4 | kg/m3 | 1800 |
| Dried density 5 | kg/m3 | 1720 |
| Water 1 | %mass | 7.8% |
| Water 2 | %mass | 9.3% |
| Water 3 | %mass | 11.7% |
| Water 4 | %mass | 13.6% |
| Water 5 | %mass | 14.5% |
| Max proctor dried density | kg/m3 | 1815 |
| Water at max proctor dried density | %mass | 11.7% |
| | | |
| **Fiber soaking treatment** | | |
| Fiber | kg | 15 |

(continued)

| Fiber soaking treatment | | |
|---|---|---|
| Humidity | %mass | 14% |
| | kg | 2.1 |
| Water absorption | %mass | 175% |
| | kg | 26.25 |
| Minimum water to be added in the soaking process | kg | 24.15 |
| Total water added in the soaking process | kg | 24.15 |
| Additional water in the soaking process (respect to water absorption) | kg | 0 |
| | | |
| Water to be added in the mixing process | | |
| | | |
| Fine material | kg | 750 |
| Soil | kg | 250 |
| Fibers | kg | 15 |
| Fine material+Soil+Fibers | kg | 1015 |
| Water at max proctor dried density | %mass | 11.7% |
| | kg | 118.755 |
| Humidity Fine material | %mass | 1.2% |
| | kg | 9 |
| Humidity soil | % weight | 4.3% |
| | kg | 10.75 |
| Water brought by additional water in the soaking process | kg | 0 |
| Water due to humidity and fiber soaking process | kg | 19.75 |
| Water to be added in the mixing process | kg | 99.005 |

Table 4. Mechanical and physical properties of the soil mix for example 1

| SOIL+FINE MATERIAL+FIBERS+WATER CHARACTERIZATION | | |
|---|---|---|
| | | |
| Soil+fine material+fibers+water | | |
| Granulometry class | mm | 0/4 |
| Max proctor dried density | kg/m3 | 1815 |
| Water at max proctor dried density | %mass | 11.7% |
| k-Water permeability | mm/s | 1.78E-02 |
| E-Elastic Modulus | kPa | 20300 |
| c'-Cohesion at peak | kPa | 5.6 |
| $\phi$'-Angle of internal friction at peak | ° | 34.2 |
| c'r-Residual cohesion | kPa | 4.2 |
| $\phi$'r-Residual angle of internal friction | ° | 30.4 |

(continued)

| Soil+fine material+fibers+water | | |
|---|---|---|
| Humidity | %mass | 11.7% |

Figure 5 shows the Proctor Compaction Test for this example.

Example 2

Example 2 shows a soil mixture according to invention, that is characterized by a high fine material/soil ratio (19), a fine material with granulometry class 0/1, a soil (coming partially from the jobsite and partially from another location than the excavated soil) and low content of jute fibers. The soaking process was done by adding excess of water respect to the minimum water required; all the remaining water was added when mixing with the other components.

Table 5. Raw material characterization for example 2

| RAW MATERIAL CHARACTERIZATION | | |
|---|---|---|
| | | |
| **Fine material** | | |
| Granulometry class | mm | 0/1 |
| Max proctor dried density | kg/m3 | 1680 |
| Water at max proctor dried density | %mass | 6.8% |
| k-Water permeability | mm/s | 7.65E-03 |
| E-Elastic Modulus | kPa | 31000 |
| c'-Cohesion at peak | kPa | 0 |
| $\phi$'-Angle of internal friction at peak | ° | 32.45 |
| c'r-Residual cohesion | kPa | 0 |
| $\phi$'r-Residual angle of internal friction | ° | 31.56 |
| Humidity | %mass | 0.4% |
| | | |
| **Soil** | | |
| Granulometry class | mm | 0/4 |
| Max proctor dried density | kg/m3 | 1950 |
| Water at max proctor dried density | %mass | 14.7% |
| k-Water permeability | mm/s | 4.38E-03 |
| E-Elastic Modulus | kPa | 11400 |
| c'-Cohesion at peak | kPa | 14.6 |
| $\phi$'-Angle of internal friction at peak | ° | 31.5 |
| c'r-Residual cohesion | kPa | 7.5 |
| $\phi$'r-Residual angle of internal friction | ° | 28.5 |
| Humidity | %mass | 3.1% |
| | | |
| **Fibers** | | |
| Material | - | Jute |
| Dried density | kg/m3 | 1610 |

(continued)

| Fibers | | |
|---|---|---|
| Bulk density | kg/m3 | 360 |
| Length | mm | 30-50 |
| Diameter | mm | 0.1-0.2 |
| Tensile strenght | Mpa | 320 |
| E-Elastic Modulus | Mpa | 28.2 |
| Water absorbtion | %mass | 115% |
| Humidity | %mass | 5% |

Table 6. Soil mixture composition for example 2

| SOIL+FINE MATERIAL+FIBERS+WATER MIXING | | |
|---|---|---|
| | | |
| **Composition (dry materials)** | | |
| Fine material | kg | 1780 |
| Soil | kg | 95 |
| Fibers | kg | 12 |
| Fine material/Soil | - | 19 |
| Fibers | %mass (fine material+soil) | 0.64% |
| | | |
| **Proctor (Soil+fine material+fibers)** | | |
| Dried density 1 | kg/m3 | 1540 |
| Dried density 2 | kg/m3 | 1650 |
| Dried density 3 | kg/m3 | 1695 |
| Dried density 4 | kg/m3 | 1750 |
| Dried density 5 | kg/m3 | 1710 |
| Water 1 | %mass | 7.3% |
| Water 2 | %mass | 9.5% |
| Water 3 | %mass | 11.2% |
| Water 4 | %mass | 14.1% |
| Water 5 | %mass | 17.5% |
| Max proctor dried density | kg/m3 | 1710 |
| Water at max proctor dried density | %mass | 14.1% |
| | | |
| **Fiber soaking treatment** | | |
| Fiber | kg | 12 |
| | %mass | 5% |
| Humidity | kg | 0.6 |

(continued)

| Fiber soaking treatment | | |
|---|---|---|
| | %mass | 115% |
| Water absorption | kg | 13.8 |
| Minimum water to be added in the soaking process | kg | 13.2 |
| Total water added in the soaking process | kg | 70 |
| Additional water in the soaking process (respect to water absorption) | kg | 56.8 |
| | | |
| **Water to be added in the mixing process** | | |
| Fine material | kg | 1780 |
| Soil | kg | 95 |
| Fibers | kg | 12 |
| Fine material+Soil+Fibers | kg | 1887 |
| | %mass | 14.1% |
| Water at max proctor dried density | kg | 266.067 |
| | %mass | 0.4% |
| Humidity Fine material | kg | 7.12 |
| | %mass | 3.1% |
| Humidity soil | kg | 2.945 |
| Water brought by additional water in the soaking process | kg | 56.8 |
| Water due to humidity and fiber soaking process | kg | 66.865 |
| Water to be added in the mixing process | kg | 199.202 |

Table 7. Mechanical and physical properties of the soil mix for example 2

| SOIL+FINE MATERIAL+FIBERS+WATER CHARACTERIZATION | | |
|---|---|---|
| | | |
| **Soil+fine material+fibers+water** | | |
| Granulometry class | mm | 0/4 |
| Max proctor dried density | kg/m3 | 1710 |
| Water at max proctor dried density | %mass | 7.7% |
| k-Water permeability | mm/s | 7.29E-03 |
| E-Elastic Modulus | kPa | 28800 |
| c'-Cohesion at peak | kPa | 3.2 |
| $\phi$'-Angle of internal friction at peak | ° | 32.04 |
| c'r-Residual cohesion | kPa | 2.8 |
| $\phi$'r-Residual angle of internal friction | ° | 31.25 |
| Humidity | %mass | 14.1% |

Figure 6 shows the Proctor Compaction Test for this example.

Example 3

Example 3 shows a soil mixture according to invention, that is characterized by medium fine material/soil ratio (10), a fine material with granulometry class 0/2, a soil originally very humid (coming totally from the jobsite) and high content of sisal fibers (3.2%). The soaking process was done by adding excess of water respect to the minimum water required; all the remaining water was added when mixing with the other components.

Table 8. Raw material characterization for example 3

| RAW MATERIAL CHARACTERIZATION | | |
|---|---|---|
| | | |
| **Fine material** | | |
| Granulometry class | mm | 0/2 |
| Max proctor dried density | kg/m3 | 1920 |
| Water at max proctor dried density | %mass | 8.1% |
| k-Water permeability | mm/s | 4.32E-02 |
| E-Elastic Modulus | kPa | 28500 |
| c'-Cohesion at peak | kPa | 0 |
| $\phi$'-Angle of internal friction at peak | ° | 36.53 |
| c'r-Residual cohesion | kPa | 0 |
| $\phi$'r-Residual angle of internal friction | ° | 34.53 |
| Humidity | %mass | 1.0% |
| | | |
| **Soil** | | |
| Granulometry class | mm | 0/1 |
| Max proctor dried density | kg/m3 | 2150 |
| Water at max proctor dried density | %mass | 16.1% |
| k-Water permeability | mm/s | 9.82E-03 |
| E-Elastic Modulus | kPa | 13200 |
| c'-Cohesion at peak | kPa | 35.2 |
| $\phi$'-Angle of internal friction at peak | ° | 34.6 |
| c'r-Residual cohesion | kPa | 28.1 |
| $\phi$'r-Residual angle of internal friction | ° | 27.5 |
| Humidity | %mass | 7.1% |
| | | |
| **Fibers** | | |
| Material | - | Sisal |
| Dried density | kg/m3 | 1300 |
| Bulk density | kg/m3 | 420 |
| Lenght | mm | 15-40 |
| Diameter | mm | 0.1-0.4 |
| Tensile strenght | Mpa | 450 |
| E-Elastic Modulus | Mpa | 24.3 |

(continued)

| Fibers | | |
|---|---|---|
| Water absorbtion | %mass | 70% |
| Humidity | %mass | 1% |

Table 9. Soil mixture composition for example 3

| SOIL+FINE MATERIAL+FIBERS+WATER MIXING | | |
|---|---|---|
| | | |
| **Composition (dry materials)** | | |
| Fine material | kg | 400 |
| Soil | kg | 40 |
| Fibers | kg | 14 |
| Fine material/Soil | - | 10 |
| Fibers | %mass (fine material+soil) | 3.18% |
| **Proctor (Soil+fine material+fibers)** | | |
| Dried density 1 | kg/m3 | 1650 |
| Dried density 2 | kg/m3 | 1880 |
| Dried density 3 | kg/m3 | 1955 |
| Dried density 4 | kg/m3 | 1910 |
| Dried density 5 | kg/m3 | 1750 |
| Water 1 | %mass | 4.2% |
| Water 2 | %mass | 7.5% |
| Water 3 | %mass | 10.2% |
| Water 4 | %mass | 12.8% |
| Water 5 | %mass | 15.2% |
| Max proctor dried density | kg/m3 | 1955 |
| Water at max proctor dried density | %mass | 10.2% |
| | | |
| **Fiber soaking treatment** | | |
| Fiber | kg | 14 |
| Humidity | %mass | 1% |
| | kg | 0.14 |
| Water absortion | %mass | 70% |
| | kg | 9.8 |
| Minimum water to be added in the soaking process | kg | 9.66 |
| Total water added in the soaking process | kg | 48.618 |
| Additional water in the soaking process (respect to water absortion) | kg | 38.958 |
| | | |

(continued)

| Water to be added in the mixing process | | |
|---|---|---|
| Fine material | kg | 400 |
| Soil | kg | 40 |
| Fibers | kg | 9 |
| Fine material+Soil+Fibers | kg | 449 |
| Water at max proctor dried density | %mass | 10.2% |
| | kg | 45.798 |
| Humidity Fine material | %mass | 1.0% |
| | kg | 4 |
| Humidity soil | %mass | 7.1% |
| | kg | 2.84 |
| Water brought by additional water in the soaking process | kg | 38.958 |
| Water due to humidity and fiber soaking process | kg | 45.798 |
| Water to be added in the mixing process | kg | 0 |

Table 10. Mechanical and physical properties of the soil mix for example 3

| SOIL+FINE MATERIAL+FIBERS+WATER CHARACTERIZATION | | |
|---|---|---|
| | | |
| Soil+fine material+fibers+water | | |
| Granulometry class | mm | 0/2 |
| Max proctor dried density | kg/m3 | 1955 |
| Water at max proctor dried density | %mass | 9.5% |
| k-Water permeability | mm/s | 3.75E-02 |
| E-Elastic Modulus | kPa | 26000 |
| $c'$-Cohesion at peak | kPa | 12.3 |
| $\phi'$-Angle of internal friction at peak | ° | 35.2 |
| $c'r$-Residual cohesion | kPa | 14.5 |
| $\phi'r$-Residual angle of internal friction | ° | 33.2 |
| Humidity | %mass | 10.2% |

Figure 7 shows the Proctor Compaction Test for this example.

**Claims**

1.  A method for soil mixture reinforcement for growing grass for sport applications, the soil mixture comprising soil, fine material and natural fibers, the fine material being selected from the group consisting of sand, stone powder, bypass dust, limestone, brick powder and combinations thereof, the natural fibers being selected from the group consisting of fibers of banana, sisal, coconut, hemp, sugarcane/ bagasse, bamboo, jute, flax, elephant grass, musamba, wood, cotton, kenaf and combinations thereof, **characterised in that** the method comprises the following steps:

    (a) excavating and removing the top layer of an original soil to a depth from 10 to 30 cm,

(b) mixing

- the original soil removed in step (a) in a portion of 5 to 45% by weight of the total solid content of the soil mixture and a weight ratio of fine material to soil from 1.2 and 19,
- the fine material in a portion of 55 to 95% by weight of the total solid content of the soil mixture,
- the natural fibers in a portion of 0.6% to 3% by weight of the total solid content of the soil mixture, and
- water in a portion of 8% to 20% weight of the total solid content of the soil mixture,

(c) discharging the soil mixture obtained in step (b) and placing it in a location and
(d) compacting the surface obtained after step (c).

2. Method according to claim 1, **characterised in that** the soil mixture has a cohesion c' from 5 KPa to 80 KPa, an angle of internal friction $\phi$' from 15° to 45°, a residual angle of internal friction $\phi$'r from 10° to 40° and a residual cohesion c'r from 2 KPa to 60 KPa.

3. Method according to claim 1 or 2, **characterised in that** step (b) comprises the following steps:

(b1) dispersing the natural fibers in water,
(b2) adding the dispersed fibers in water from step (b1) to the fine material and mixing;
(b3) adding the soil and mixing.

4. Method according to claim 3, **characterised in that** in steps (b2) and (b3), mixing is in a mixer for 2 to 10 minutes.

5. Method according to claim 3, **characterised in that** water is added during intermediate steps (b2) and/or (b3).

6. Method according to any one of claims 1 to 5, **characterised in that** in step (c) the mixture is uniformly distributed manually or mechanically.

7. Method according to any one of claims 1 to 2, **characterised in that** the components in step (b) are added simultaneously.

8. Method according to any one of claims 1 to 7, **characterised in that** superabsorbent polymers are added to the mix in step (b).

9. Method according to any claim one of claims 1 to 8, **characterised in that** superabsorbent polymers are added in the range of 0.1% to 2% (w/w) of the total solid content.

10. Method according to any one of claims 1 to 9, **characterised in that** water saturated porous material with particle size of less than 10 mm additions is added to the mix in step (b).

11. Method according to claim 10, **characterised in that** water saturated porous material is selected from the group consisting of calcium silicates hydrates, zeolites, expanded perlite, vermiculite, crushed expanded or foamed concrete and combinations thereof.

12. Method according to claim 10 or 11, **characterised in that** water saturated porous material is added from 0.5 to 5 by % weight of dry solid content with respect to dry solid content of the fine material and soil.

13. Method according to any one of claims 1 to 12, **characterised in that** grass seeds are added to the mix in step (b).

14. Method according to claim 13, **characterised in that** grass seeds are added in the mix in step (b) in the range of 0.1% to 2% (w/w) of the total solid content.

**Patentansprüche**

1. Verfahren zur Bodenmischungsverfestigung zur Anpflanzung von Gras für Sportanwendungen, wobei die Bodenmischung Boden, Feinmaterial und natürliche Fasern umfasst, wobei das Feinmaterial aus der Gruppe bestehend aus Sand, Steinmehl, Bypass-Staub, Kalkstein, Ziegelpulver und Kombinationen derselben ausgewählt wird, wobei die natürlichen Fasern aus der Gruppe bestehend aus Fasern von Banane, Sisal, Kokosnuss, Hanf, Zuckerrohr/Bagasse, Bambus, Jute, Flachs, Elefantengras, Musamba, Holz, Baumwolle, Kenaf und Kombinationen derselben ausgewählt werden, **dadurch gekennzeichnet, dass** das Verfahren die folgenden Schritte umfasst:

(a) das Ausgraben und Beseitigen der oberen Schicht eines ursprünglichen Bodens bis zu einer Tiefe von 10 bis 30 cm,
(b) das Mischen von

- dem ursprünglichen Boden, welcher in Schritt (a) beseitigt wurde, in einem Anteil von 5 bis 45 Gew.-% des Gesamtfeststoffgehaltes der Bodenmischung und einem Gewichtsverhältnis von Feinmaterial zu Boden von 1,2 und 19,
- dem Feinmaterial in einem Anteil von 55 bis 95 Gew.-% des Gesamtfeststoffgehaltes der Bodenmischung,
- den natürlichen Fasern in einem Anteil von 0,6 Gew.-% bis 3 Gew.-% des Gesamtfeststoffgehaltes der Bodenmischung, und
- Wasser in einem Anteil von 8 Gew.-% bis 20 Gew.-% des Gesamtfeststoffgehaltes der Bodenmischung,

(c) das Abgeben der in Schritt (b) erhaltenen Bodenmischung und das Platzieren derselben in einem Ort und
(d) das Pressen der nach Schritt (c) erhaltenen Oberfläche.

2. Verfahren nach Anspruch 1, **dadurch gekennzeichnet, dass** die Bodenmischung eine Kohäsion c' von 5 KPa bis 80 KPa, einen inneren Reibungswinkel $\phi$' von 15° bis 45°, einen restlichen inneren Reibungswinkel $\phi$'r von 10° bis 40° und eine restliche Kohäsion c'r von 2 KPa bis 60 KPa aufweist.

3. Verfahren nach Anspruch 1 oder 2, **dadurch gekennzeichnet, dass** Schritt (b) die folgenden Schritte umfasst:

(b1) das Dispergieren der natürlichen Fasern in Wasser,
(b2) das Hinzufügen der dispergierten Fasern in Wasser aus Schritt (b1) zum Feinmaterial und das Mischen derselben;
(b3) das Hinzufügen des Bodens und das Mischen desselben.

4. Verfahren nach Anspruch 3, **dadurch gekennzeichnet, dass** in den Schritten (b2) und (b3) das Mischen in einem Mischer für 2 bis 10 Minuten stattfindet.

5. Verfahren nach Anspruch 3, **dadurch gekennzeichnet, dass** Wasser während der Zwischenschritte (b2) und/oder (b3) hinzugefügt wird.

6. Verfahren nach einem der Ansprüche 1 bis 5, **dadurch gekennzeichnet, dass** in Schritt (c) die Mischung gleichmäßig, manuell oder mechanisch, verteilt wird.

7. Verfahren nach einem der Ansprüche 1 bis 2, **dadurch gekennzeichnet, dass** die Komponenten in Schritt (b) gleichzeitig hinzugefügt werden.

8. Verfahren nach einem der Ansprüche 1 bis 7, **dadurch gekennzeichnet, dass** der Mischung in Schritt (b) superabsorbierende Polymere hinzugefügt werden.

9. Verfahren nach einem der Ansprüche 1 bis 8, **dadurch gekennzeichnet, dass** superabsorbierende Polymere im Bereich von 0,1% bis 2% (Gew./Gew.) des Gesamtfeststoffgehalts hinzugefügt werden.

10. Verfahren nach einem der Ansprüche 1 bis 9, **dadurch gekennzeichnet, dass** der Mischung in Schritt (b) wassergesättigtes poröses Material mit Partikelgrößen der Zusätze von weniger als 10 mm hinzugefügt wird.

11. Verfahren nach Anspruch 10, **dadurch gekennzeichnet, dass** wassergesättigtes poröses Material aus der Gruppe bestehend aus Kalziumsilikathydraten, Zeolithen, Blähperlit, Vermiculit, zerkleinertem Bläh- oder Schaumbeton und Kombinationen derselben ausgewählt wird.

12. Verfahren nach Anspruch 10 oder 11, **dadurch gekennzeichnet, dass** wassergesättigtes poröses Material mit 0,5 bis 5 Gew.-% Trockenfeststoffgehalt bezogen auf den Trockenfeststoffgehalt des Feinmaterials und des Bodens hinzugefügt wird.

**13.** Verfahren nach einem der Ansprüche 1 bis 12, **dadurch gekennzeichnet, dass** der Mischung in Schritt (b) Grassamen hinzugefügt werden.

**14.** Verfahren nach Anspruch 13, **dadurch gekennzeichnet, dass** der Mischung in Schritt (b) Grassamen im Bereich von 0,1% bis 2% (Gew./Gew.) des Gesamtfeststoffgehalts hinzugefügt werden.

**Revendications**

**1.** Procédé de renforcement d'un mélange de sol pour la croissance d'herbe pour des applications sportives, le mélange de sol comprenant du sol, un matériau fin et des fibres naturelles, le matériau fin étant choisi dans le groupe constitué par le sable, la poudre de pierre, la poussière de dérivation, le calcaire, la poudre de brique et leurs combinaisons, les fibres naturelles étant choisies dans le groupe constitué par des fibres de banane, sisal, noix de coco, chanvre, sucre/bagasse, bambou, jute, lin, herbe éléphant, musamba, bois, coton, kenaf et leurs combinaisons, **caractérisé en ce que** le procédé comporte les étapes suivantes :

(a) l'excavation et l'enlèvement de la couche supérieure d'un sol originaire jusqu'à une profondeur de 10 à 30 cm,
(b) le mélange

- du sol originaire enlevé à l'étape (a) dans une portion de 5 à 45 % en poids de la teneur totale en matières solides du mélange de sol et un rapport pondéral des matières fines au sol de 1,2 et 19,
- de la matière fine dans une portion de 55 à 95 % en poids de la teneur totale en matières solides du mélange de sol,
- des fibres naturelles dans une portion de 0,6 % à 3 % en poids de la teneur totale en matières solides du mélange de sol, et
- de l'eau dans une portion de 8 à 20 % en poids de la teneur totale en matières solides du mélange de sol,

(c) le déchargement du mélange de sol obtenu à l'étape b) et le placer dans un endroit et
(d) le compactage de la surface obtenue après l'étape (c).

**2.** Procédé selon la revendication 1, **caractérisé en ce que** le mélange de sol a une cohésion c' de 5 KPa à 80 KPa, un angle de frottement interne Φ' de 15° à 45°, un angle résiduel de friction interne Φ'r de 10° à 40° et une cohésion résiduelle c'r de 2 KPa à 60 Kpa

**3.** Procédé selon la revendication 1 ou 2, **caractérisé en ce que** l'étape (b) comprend les étapes suivantes:

(b1) dispersion des fibres naturelles dans l'eau,
(b2) l'ajoute des fibres dispersées dans l'eau de l'étape (b1) au matériau fin et mélanger;
(b3) l'ajoute du sol et mélanger.

**4.** Procédé selon la revendication 3, **caractérisé en ce que** dans les étapes (b2) et (b3), on mélange dans un mélangeur de 2 à 10 minutes.

**5.** Procédé selon la revendication 3, **caractérisé en ce qu'on** ajoute de l'eau pendant les étapes intermédiaires (b2) et/ou (b3).

**6.** Procédé selon l'une quelconque des revendications 1 à 5, **caractérisé en ce que** dans l'étape (c), le mélange est réparti uniformément manuellement ou mécaniquement.

**7.** Procédé selon l'une quelconque des revendications 1 à 2, **caractérisé en ce que** les composants de l'étape (b) sont ajoutés simultanément.

**8.** Procédé selon l'une quelconque des revendications 1 à 7, **caractérisé en ce que** des polymères super absorbants sont ajoutés au mélange à l'étape (b).

**9.** Procédé selon l'une quelconque des revendications 1 à 8, **caractérisé en ce que** l'on ajoute des polymères super absorbants dans la plage de 0,1 % à 2 % (w/w) de la teneur totale en solides.

**10.** Procédé selon l'une quelconque des revendications 1 à 9, **caractérisé en ce qu'**un matériau poreux saturé d'eau avec une granulométrie inférieure à 10 mm est ajouté au mélange à l'étape (b).

**11.** Procédé selon la revendication 10, **caractérisé en ce qu'**un matériau poreux saturé d'eau est choisi dans le groupe constitué par les silicates de calcium hydratés, les zéolithes, la perlite expansée, la vermiculite, le béton expansé ou moussé broyé et leurs combinaisons.

**12.** Procédé selon la revendication 10 ou 11, **caractérisé en ce qu'**on ajoute un matériau poreux saturé d'eau de 0,5 à 5 % en poids de matière solide sèche par rapport à la teneur en matière solide sèche du matériau fin et du sol.

**13.** Procédé selon l'une quelconque des revendications 1 à 12, **caractérisé en ce que** des graines d'herbe sont ajoutées au mélange à l'étape (b).

**14.** Procédé selon la revendication 13, **caractérisé en ce que** des graines d'herbe sont ajoutées dans le mélange à l'étape (b) dans la plage de 0,1% à 2% (w/w) de la teneur totale en matières solides.

Fig. 1

Fig. 2

Fig. 3

EP 3 276 077 B1

EP 3 276 077 B1

Fig. 4

EP 3 276 077 B1

Fig. 5

Fig. 6

EP 3 276 077 B1

Fig. 7

**EP 3 276 077 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011051744 A
- WO 2012159145 A
- GB 2342029 A
- FR 2835258
- EP 2161981 A
- GB 2274997 A
- WO 9914288 A
- WO 9949137 A